(19) Europäisches Patentamt
European Patent Office
Office européen des brevets

(11) Veröffentlichungsnummer: **0 013 904**
**B1**

(12) # EUROPÄISCHE PATENTSCHRIFT

(45) Veröffentlichungstag der Patentschrift: **09.03.83**

(51) Int. Cl.³: **C 08 G 63/62**

(21) Anmeldenummer: **80100103.3**

(22) Anmeldetag: **10.01.80**

(54) **Verfahren zur Herstellung von Polycarbonaten.**

(30) Priorität: **17.01.79 DE 2901665**

(43) Veröffentlichungstag der Anmeldung:
**06.08.80 Patentblatt 80/16**

(45) Bekanntmachung des Hinweises auf die Patenterteilung:
**09.03.83 Patentblatt 83/10**

(84) Benannte Vertragsstaaten:
**DE FR GB IT NL**

(56) Entgegenhaltungen:
**US - A - 3 240 756**

(73) Patentinhaber: **BAYER AG**
**Zentralbereich Patente, Marken und Lizenzen**
**D-5090 Leverkusen 1, Bayerwerk (DE)**

(72) Erfinder: **Idel, Karsten, Dr.**
**Scheiblerstrasse 81**
**D-4150 Krefeld (DE)**
Erfinder: **Serini, Volker, Dr.**
**Scheiblerstrasse 81**
**D-4150 Krefeld (DE)**
Erfinder: **Freitag, Dieter, Dr.**
**Hasenheide 10**
**D-4150 Krefeld (DE)**
Erfinder: **Fengler, Gerd, Dr.**
**Bethelstrasse 16**
**D-4150 Krefeld (DE)**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 013 904 B1

Verfahren zur Herstellung von Polycarbonaten

Gegenstand der vorliegenden Erfindung ist ein Verfahren zur Herstellung von thermoplastischen aromatischen Polycarbonaten mit Polykondensationsgraden P von mindestens 30, die Struktureinheiten der Formeln 1 und/oder 2

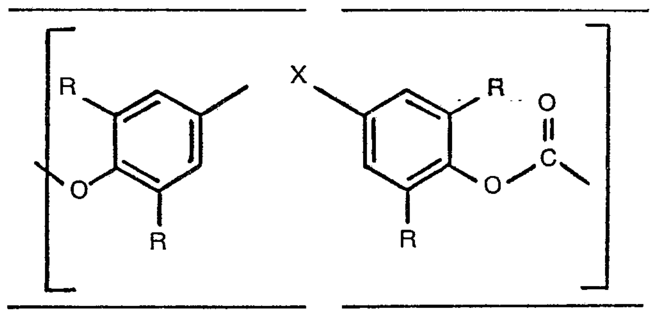

(1)

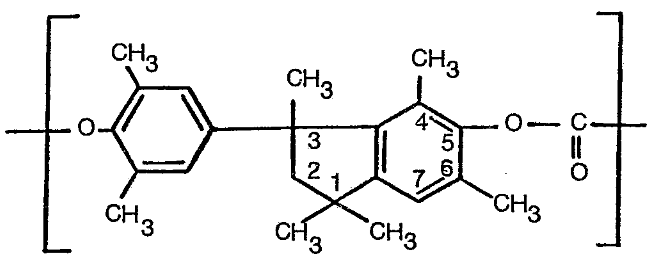

(2)

enthalten, wobei R $CH_3$ und X eine Einfachbindung, $C_1$—$C_5$-Alkylen, $C_2$—$C_5$-Alkyliden, Cyclohexylen, Cyclohexyliden, —O— oder —S— bedeuten, aus mindestens 80 Mol-%, bezogen auf Gesamtmolmenge an eingesetzten Diphenolen, Diphenolen der Formel 3 und/oder 4, worin R und X die für Formel 1 angegebene Bedeutung haben,

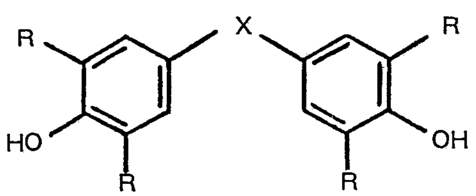

(3)

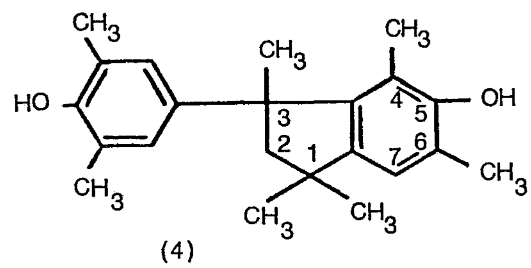

(4)

und gegebenenfalls anderen beliebigen Diphenolen, die in den vier ortho-Stellungen zu den phenolischen OH-Gruppen nicht mit C-Substituenten persubstituiert sind, gegebenenfalls in Anwesenheit von Kettenbegrenzern und gegebenenfalls von Verzweigern, nach dem Phasengrenzflächenverfahren in einem Gemisch aus wäßriger alkalischer Phase und inerter organischer Phase, das dadurch gekennzeichnet ist, daß man die Umsetzung in Gegenwart von 0,2 bis 2,5 Mol-%, bezogen auf Mole an eingesetzten Diphenolen, an quartären Ammoniumsalzen und gegebenenfalls zusätzlich 0,2 bis 5 Mol% bezogen auf Mole an eingesetzten Diphenolen, an tertiären Aminen bei Temperaturen zwischen 10° und 40°C durchführt und eine Reaktionszeit von 0,1 bis 2 Stunden einzuhalten ist.

Die Molmenge an Diphenolen der Formeln 3 und/oder 4 soll mindestens 80 Mol% und insbesondere mindestens 90 Mol%, bezogen auf Gesamtmolmenge an eingesetzten Molen Diphenolen betragen. Demzufolge beträgt die jeweilige Molmenge an den anderen Diphenolen maximal 20 Mol% und insbesondere maximal 10 Mol%. Vorzugsweise geeignete andere Diphenole sind die der Formel 3 a

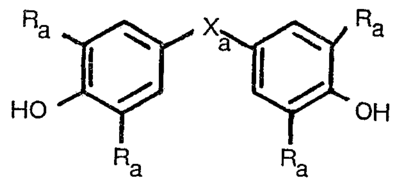

(3a)

worin

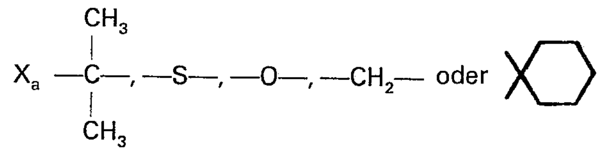

und $R_a$ H, Br oder Cl sind, wobei die vier $R_a$-Substituenten sowohl gleich als auch verschieden sein können.

Die Umsetzung der Diphenole beim Phasengrenzflächenverfahren erfolgt in bekannter Weise entweder in Form ihrer Alkalisalze, ihrer Chlorkohlensäureester oder Oligocarbonate (Vorphosgenate), die gegebenenfalls Chlorkohlensäureendgruppen haben können.

Die vorstehend genannten Molverhältnisse für die Umsetzung der drei Arten von Diphenolen berechnen sich bei Einsatz der Alkalisalze, Chlorkohlensäureester und/oder Oligocarbonate der Diphenole auf die diesen Reaktionsformen zugrunde liegenden Molmengen an Diphenolen.

Ebenso wird die Menge an einzusetzendem Phosgen bei dem Phasengrenzflächenverfahren in bekannter Weise von der Mitverwendung von Chlorkohlensäureestern mitbestimmt.

Infolge des quantitativen Umsatzes der Diphenole haben die nach dem erfindungsgemäßen Verfahren erhältlichen Polycarbonate mindestens 80 Mol% und insbesondere mindestens 90 Mol%, bezogen auf die Gesamtmolmenge an Carbonatstruktureinheiten, Carbonatstruktureinheiten der Formel 1 und/oder der Formel 2 und gegebenenfalls jeweils komplementäre Molmengen an Carbonatstruktureinheiten, die aus den jeweils anderen eingesetzten Diphenolen resultieren.

Die nach dem erfindungsgemäßen Verfahren erhältlichen Polycarbonate können beliebige Polykondensationsgrade P haben. Das erfindungsgemäße Verfahren erlaubt es vor allem solche mit P von mindestens 30, insbesondere von mindestens 40, aber auch solche von mindestens 50 auf einfache Weise zu synthetisieren.

Die Herstellung von hochmolekularen Polycarbonaten, die ausschließlich oder überwiegend aus Carbonatstruktureinheiten der Formel 1 aufgebaut sind, gelingt bisher nur durch besondere Verfahrensführung, die von den üblichen Polycarbonatherstellungsverfahren abweicht (siehe DT—OS 15 70 703, DT—OS 20 63 050 (Le A 13 359), DT—OS 20 63 052 (Le A 13 425), DT—OS 22 11 957 (Le A 14 240) und DT—OS 22 11 956 (Le A 14 249)). Diese Verfahren haben jedoch den Nachteil, daß sie relativ großer Mengen Amine bedürfen, (siehe beispielsweise die Beispiele 1 bis 4 der DT—OS 22 11 957), während das erfindungsgemäße Verfahren ohne Zusatz von tertiären Aminen auskommen kann.

In US—PS 3 275 601, US—PS 3 517 071 und in der DT—OS 26 15 038 (Le A 16 842) ist die Herstellung von Polycarbonaten aud o, o′, o″, o‴-tetraalkylsubstituierten Diphenolen beschrieben, wobei Ammoniumsalze verwendet werden können.

Aus US—PS 3 275 601, Spalte 5, Zeiten 26 ff läßt sich jedoch nicht entnehmen, daß bereits geringe Mengen an Ammoniumsalzen gegebenenfalls in Kombination mit geringen Mengen an Amin zur Herstellung von hochmolekularen Polycarbonaten aus mindestens 50 Mol-% an o, o′, o″, o‴-tetraalkylsubstituierten Diphenolen ausreichen, während bei alleiniger Verwendung von Amin große Mengen nötig sind.

Aus US—PS 3 517 071, Spalte 20, Zeilen 57—60 und Spalte 22, Zeiten 21—27 ergibt sich sogar, daß quartäre Ammoniumsalze geringere katalytische Wirksamkeit besitzen als tertiäre Amine.

Die DT—OS 26 15 038 umfaßt sowohl Polycarbonate mit geringen Anteilen an Struktureinheiten der Formel 2 als auch solche mit hohen, ja bis zu 100 Mol-% Anteilen an Struktureinheiten der Formel 2. Demzufolge ist die auf Seite 5, Absatz 2 zitierte Vielzahl von Herstellungsverfahren so zu verstehen, daß für die Herstellung von Polycarbonaten aus mindestens 50 Mol-% an o, o′, o″, o‴-tetraalkylsubstituierten Diphenolen die Herstellungsmethoden aus den bereits oben zitierten DT—OSen 20 63 050, 20 63 052, 15 70 703, 22 11 956 und 22 11 957 in Frage kommen, während für die Herstellung von Polycarbonaten mit weniger also 50 Mol% an o, o′, o″, o‴-tetraalkylsubstituierten Diphenolen, welche im vorliegenden Zusammenhang ohne Interesse sind, im Prinzip jedes Herstellungsverfahren geeignet ist, also auch die der US-Patente 3 271 368, 2 991 273, 3 271 367 und 2 999 846, in denen die Verwendung von Ammoniumsalzen als Katalysatoren beschrieben ist.

Ein weiterer Vorteil des erfindungsgemäßen Verfahrens besteht darin, daß die zur Herstellung hochmolekularer Produkte benötigte Phosgenmenge weniger als 170 Mol-%, im allgemeinen sogar weniger als 150 Mol-%, bezogen auf jeweils eingesetzte Mole an Diphenolen, beträgt.

Die nach dem erfindungsgemäßen Verfahren erhältlichen Polycarbonate sind außerdem durch einen besonders geringen Gehalt an phenolischen Endgruppen ausgezeichnet, was bekanntlich bei der thermoplastischen Verarbeitung von Polycarbonaten von Vorteil ist.

Beispiele für die erfindungsgemäß einzusetzenden Diphenole der Formel 3 sind
Bis-(3,5-dimethyl-4-hydroxyphenyl)-methan
2,2-Bis-(3,5-dimethyl-4-hydroxyphenyl)-propan
3,3-Bis-(3,5-dimethyl-4-hydroxyphenyl)-pentan
1,1-Bis-(3,5-dimethyl-4-hydroxyphenyl)-cyclohexan
1,4-Bis-(3,5-dimethyl-4-hydroxyphenyl)-cyclohexan
Bis-(3,5-dimethyl-4-hydroxyphenyl)-äther
Bis-(3,5-dimethyl-4-hydroxyphenyl)

Die mit den erfindungsgemäß einzusetzenden Diphenolen der Formeln 3 und/oder 4 gegebenenfalls zu cokondensierenden anderen beliebigen Diphenole, die in den vier ortho-Stellungen zu den beiden phenolischen OH-Gruppen nicht mit C-Substituenten persubstituiert sind, sollen vorzugsweise zwischen 6 und 30 C-Atome enthalten, insbesondere in mindestens einer der vier zu den phenolischen OH-Gruppen orthoständigen Positionen unsubstituiert oder durch Halogen substituiert sein.

Beispiele für diese anderen Diphenole sind
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-äther
Bis-(hydroxyphenyl)-ketone
Bis-(hydroxyphenyl)-sulfoxide
Bis-(hydroxyphenyl)-sulfone und
$\alpha,\alpha'$-Bis-(hydroxyphenyl)-diisopropylbenzole.

Bevorzugte Beispiele für diese anderen Diphenole sind:
2,2-Bis-(4-hydroxyphenyl)-propan,
2,2-Bis-(4-hydroxyphenyl)-methan,
1,1-Bis-(4-hydroxyphenyl)-cyclohexan,
2,2-Bis-(3,5-dichlor-4-hydroxyphenyl)-propan,
2,2-Bis-(3,5-dibrom-4-hydroxyphenyl)-propan und
Bis-(4-hydroxyphenyl)-sulfid.

Diese und weitere entsprechende Diphenole sind in den US—PS 3 028 365, 2 999 835, 3 148 172, 3 275 601, 2 991 273, 3 271 367, 3 062 781, 2 970 131 und 2 999 846 und in der DT—OS 1 570 703 beschrieben.

Erfindungsgemäß geeignet sind quartäre Ammoniumsalze, wobei das Heteroatom Stickstoff sowohl in geradkettigen als auch in cyclischen System vorliegen kann. Beispielsweise geeignete Ammoniumsalze sind solche mit 4 bis 50 C-Atomen und 1 bis 3 N-Atomen wie etwa:
Tetramethylammoniumbromid
Tetraäthylammoniumchlorid
Tetraäthylammoniumbromid
Tetra-n-propylammoniumbromid
Tetra-n-butylammoniumbromid
Tetra-n-butylammoniumjodid
Tetra-n-hexylammoniumbromid
Tetra-n-octylammoniumbromid
Tetra-n-decylammoniumbromid
Trioctyl-methyl-ammoniumsulfat
Tricetyl-methyl-ammoniumjodid
N-Methyl-N-decylmorpholiniumbromid
N-Methyl-N-butylmorpholiniumbromid
N-Methyl-N-octylmorpholiniumbromid
N-Methyl-N-cetylmorpholiniumbromid
N-Methyl-N-benzylmorpholiniumbromid
N-Methyl-N-benzylmorpholiniumchlorid
N-Methyl-N-äthylmorpholiniumbromid
N-Methyl-N-äthylpyrrolidiniumbromid
N-Methyl-N-butylpyrrolidiniumbromid
N-Methyl-N-cetylpyrrolidiniumbromid
N-Methyl-N-octylpyrrolidiniumbromid
N-Methyl-N-benzylpyrrolidiniumchlorid
N-(2-Hydroxyäthyl)-N-äthylpiperidiniumbromid

N-(2-Hydroxyäthyl)-N-butylpiperidiniumbromid
N-(2-Hydroxyäthyl)-N-octylpiperidiniumbromid
N-(2-Hydroxyäthyl)-N-benzylpiperidiniumchlorid
Tirpropylhexylammoniumbromid
Tripropylcetylammoniumbromid
A-Äthyl-N-butyl-piperidiniumbromid
Tricyclohexyläthylammoniumbromid
Benzyltributylammoniumbromid
Benzyltrimethylammoniumbromid
Hexadecylpiperidiniumchlorid
Hexadecyltrimethylammoniumbromid
Phenyltrimethylammoniumbromid
Tetrabutylammoniumhydrogensulfat
Teträthylammoniumhydrogensulfat
Tetraäthylammonium-4-toluolsulfonat
Tetradecylammoniumperchlorat
Tricaprylmethylammoniumbromid

Für das erfindungsgemäße Verfahren geeignete tertiäre Amine können sowohl cyclisch als auch offenkettig sein. Vorzugsweise geeignet sind aliphatische tertiäre Amine, beispielsweise solche mit 1 oder 2 N-Atomen und 3 bis 24 C-Atomen. Folgende Amine seien beispielsweise genannt:

Trimethylamin, Triäthylamin, Tributylamin, Trihexylamin, Dimethylbenzylamin, Triäthylendiamin, Tetramethyläthylendiamin, Permethyldiäthylentriamin, N,N-Dimethylcyclohexylamin, N-Äthylpiperidin, 1,4-Dimethylpiperazin, 4-Methyl-morpholin, 4,4'-(1,2-Äthandicyl)-bis-morpholin, 1,2-Diazabicyclo-(2,2,2)octan.

Die erfindungsgemäß einzusetzenden Ammoniumsalze oder deren Gemische mit tertiären Aminen können vor, während oder nach der Phosgenierung zugegeben werden, wobei die kombinierte Verwendung von Ammoniumsalzen und tertiären Aminen auch eine getrennte Zudosierung ermöglicht, z.B. den Zusatz der Ammoniumsalze vor der Phosgenierung und den Zusatz von tertiären Aminen nach der Phosgenierung.

Als Kettenbegrenzer können für das erfindungsgemäße Verfahren die in der Polycarbonatchemie üblichen verwendet werden, vorzugsweise Monophenole wie beispielsweise Phenol, p-tert.-Butylphenol, p-Methylphenol, 2,6-Dimethylphenol, Nonylphenol, p-Chlorphenol, p-Bromphenol und 2,4,6-Tribromphenol.

Die Mengen an Kettenbegrenzer liegen zwischen 0,2—10,0 Mol-% vorsugsweise zwischen 1,0—5,0 Mol-%, bezogen auf die jeweils eingesetzten Mole Diphenole.

Als wäßrige alkalische Phase für das Phasengrenzflächenverfahren dienen wäßriges Alkali oder wäßriges Erdalkali, vorzugsweise wäßriges Alkali und insbesondere wäßrige NaOH oder wäßrige KOH., Die pH-Werte der wäßrigen Phase sollen während der Polycarbonatherstellung zwischen 11 und 14 liegen.

Als inerte organische Phase dienen die in bekannter Weise nicht mit Wasser mischbaren und unter den Reaktionsbedingungen der Polycarbonatherstellung inerten Polycarbonatlösungsmittel wie beispielsweise chlorierte aliphatische Kohlenwasserstoffe wie $CH_2Cl_2$, $CHCl_3$ und 1,2-Dichloräthan, oder chlorierte aromatische Kohlenwasserstoffe wie Chlorbenzol, Dichlorbenzol und Chlortoluol.

Die Polycarbonatkonzentration in der organischen Phase nach beendeter Polykondensation beträgt bei dem erfindungsgemäßen Verfahren 18 bis 50 Gew.-%, bevorzugt 22 bis 35 Gew.-%, berechnet jeweils für das Gewicht an Polycarbonat pro Gesamtgewicht an organischer Phase.

Das Verhältnis der Volumina von organischer Phase zu wäßriger Phase nach beendeter Polykondensation soll zwischen 5:1 und 1:1,2, vorzugsweise zwischen 2,5:1 und 1,25:1 liegen.

Als Volumina der organischen und der wäßrigen Phase werden die Volumina verstanden, die die Phasen nach der Polykondensation besitzen. Die organische Phase umfaßt dann das organische Lösungsmittel und das darin gelöste Polycarbonat, die wäßrige Phase umfaßt dann das Wasser, die gebildeten Salze und den Alkaliüberschuß. Die Reaktionstemperatur liegt zwischen 10° und 40°C.

Das erfindungsgemäße Verfahren kann durch die übliche Mitverwendung von Verzweigern variiert werden. Als Verzweiger eignen sich drei oder mehr als dreifunktionelle, insbesondere 3- und 4-funktionelle Verbindungen, deren Funktionalitäten mit Phosgen, Chlorkohlensäureesterendgruppen oder Bisphenolaten unter Knüpfung einer chemischen Bindung abreagieren. Die einzusetzenden Mengen an Verzweiger liegen bei 0,05 bis 2 Mol-%, bezogen auf die jeweils eingesetzten Mole an Diphenolen.

Geeignete Verzweiger sind beispielsweise Polyhydroxyverbindungen mit drei oder mehr als drei phenolischen Hydroxy gruppen.

Als Verzweigerkomponenten kommen die in den deutschen Offenlegungsschriften 1 570 533, 15 95 762, 21 16 974, 21 13 347 und 25 090 924, der brit. Patentschrift 1 079 821 und der US-Patentschrift 3 544 514 beschriebenen Verbindungen in Frage:

Einige der verwendbaren Verbindungen mit drei oder mehr als drei phenolischen Hydroxygruppen

sind beispielsweise Phloroglucin, 4,6-Dimethyl-2,4,6-tri-(4-hydroxyphenyl)-hepten-2,4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-äthan, Tri-(4-hydroxyphenyl)-phenylmethan, 2,2-Bis-[4,4-bis-(4-hydroxyphenyl)-cyclohexyl]-propan, 2,4-Bis-(hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenyl-methyl)-benzol. Einige der sonstigen dreifunktionellen Verbindungen sind, Trimesinsäuretrichlorid, Cyanurchlorid, 3,3-Bis-(4-hydroxyphenyl)-2-oxo-2,3-dihydroindol und 3,3-Bis-(4-hydroxy-3-methylphenyl)-2-oxo-2,3-dihydroindol.

Die nach dem erfindungsgemäßen Verfahren erhaltene organische Polycarbonatlösung wird gegebenenfalls neutralisiert und elektrolytfrei gewaschen. Aus dieser gereinigten Lösung wird das Polycarbonat nach bekannten Verfahren isoliert, z.B. durch Einengen der organischen Lösung und Verdampfen des Restlösungsmittels im Vakuum oder durch Vermischen der Polycarbonatlösung mit einem organischen Lösungsmittel, beispielsweise Methanol, das zwar in dem Polycarbonatlösungsmittel der Polycarbonatlösung löslich, aber für das gelöste Polycarbonat kein Lösungsmittel ist.

Die nach dem erfindungsgemäßen Verfahren hergestellten hochmolekularen Polycarbonate stellen, wie auch schon in den deutschen Offenlegungsschriften 2 063 050, 2 063 052 und 2 615 038 beschrieben, hochwertige Kunststoffe dar, die sich gut zu Folien und Formkörpern verarbeiten lassen. Sie lassen sich auch in Mischungen mit Füllstoffen wie z.B. Mineralien, Ruß, Glasfasern und Pigmenten sowie Additiven wie Stabilisatoren gegen den Einfluß von Sauerstoff, Wärme und UV-Licht, Entformungsmitteln und flammhemmenden Zusätzen wie z.B. Halogenverbindungen, Schwefel-, Phosphor- und Antimonverbindungen und Salzen von anorganischen und organischen Säuren, z.B. Natriumsalz der perfluorierten Butansulfonsäure gut verwenden.

Herausragend ist die ausgezeichnete Solvolyse- bzw. insbesondere die Hydrolysefestigkeit der nach dem erfindungsgemäßen Verfahren zugänglichen Polycarbonate. Darüber hinaus zeigen diese Polycarbonate eine herausragende Wärmestandfestigkeit. Sie besitzen im allgemeinen Einfriertemperaturen über 160°C. Die Polycarbonate sind insbesondere dort mit großem Vorteil einzusetzen, wo es auf hohe Temperaturbeständigkeit und auf Hydrolyse-, Verseifungs- und Aminolysefestigkeit ankommt. So können sie beispielsweise zur Herstellung von Rohrleitungen für heiße alkalische oder saure Lösungen, von hochwertigen Dichtungen von Geschirr und von heißdampfsterilisierbaren Geräten dienen. Aufgrund der guten Löslichkeit in Lösungsmitteln wie Toluol und Xylol, können sie auch als Lacke z.B. zum Beschichten von Kunststoffen verwendet werden.

Eine weitere Verwendungsmöglichkeit der nach dem erfindungsgemäßem Verfahren hergestellten Polycarbonate besteht in der Abmischung mit anderen Polymeren, wie es z.B. in den deutschen Offenlegungsschriften 2 402 175, 2 402 176, 2 402 177 und 2 248 817 beschrieben wird.

So sind die erfindungsgemäßem Polycarbonate (siehe auch DOS 2 248 817) mit anderen hochmolekularen aromatischen Polycarbonaten. Insbesondere solchen auf Basis Bisphenol A oder Tetrahalogen-Bisphenol A und Gemischen davon in allen Verhältnissen homogen mischbar.

Die Polycarbonate der Erfindung können auch mit Vinylchlorid-Polymerisaten, die mindestens 70 Gew.-% Vinylchlorid enthalten und bis zu 30% anderer copolymerisierbarer Vinylmonomerer enthalten, modifiziert werden, wobei das Vinylpolymerisat direkt in Anwesenheit des Polycarbonats aus den Vinylmonomeren polymerisiert wird oder das fertige Vinylpolymerisat mit dem Polycarbonat abgemischt wird. Zusätzlich können dem Polycarbonat-Vinylchlorid-Polymerisat noch bis zu 100 Gew.-% Kautschuk oder kautschukmodifizierte thermoplastische Harze zugemischt werden.

## Beispiel 1

15,37 kg 3 E-Wasser werden mit Stickstoff gespült. Danach gibt man 5,94 kg 45%ige Natronlauge hinzu. Unter weiterem Einleiten von Stickstoff werden 4,25 kg 3,3-Bis-(3,5-dimethyl-4-hydroxyphenyl)-propan hinzugefügt und die vollständige Lösung abgewartet. Anschließend wurden hinzugegeben:

15,00 kg Methylenchlorid (unstabilisiert)
3,15 kg Chlorbenzol
39,50 kg Phenol (2,8 Mol-% immer bezogen auf die Anteile Bisphenol)
58,00 g Tetrabutylammoniumbromid (1,2 Mol-%)
33,40 g Tributylamin (1,2 Mol-%)

Innerhalb von 60 Min. wurden bei Raumtemperatur 2,25 kg Phosgen bzw. solange Phosgen eingeleitet bis kein freies Bisphenol in der wäßrigen Phase nachgewiesen werden kann. Nach 1 Stde. Nachkondensationszeit wird die organische Phase getrennt und angesäuert. Man wäscht anschließend mit 3 E-Wasser elektrolytfrei, trocknet die organische Phase und isoliert das erfindungsgemäße Polycarbonat durch Abdestillieren des Lösungsmittels

Es wird ein hochmolekulares Polycarbonat mit folgenden Kenngrößen isoliert:

$\eta_{rel} = 1,272$ (rel.Lösungsviskosität 0,5 g/100 ml, gemessen in Methylenchlorid)
$M_{LS} = 34000$ (mittleres Molekulargewicht aus Lichtstreuungsmessungen)
$T_E = 201°$ (Differentialthermoanalyse)

Wird der Ansatz direkt nach Ende der Phosgenierung wie oben aufgearbeitet, erhält man ein Polycarbonat mit einer $\eta_{rel} = 1,252$. Dies zeigt den raschen Aufbau schon in der Phosgenierungsphase.

Beispiel 2

Vergleichsbeispiel gemäß DT—OS 20 63 050 mit Triäthylamin alsalleinigen Katalysator.

In 600 ml 3 E-Wasser werden 28,0 g Natriumhydroxid, 56,8 g (0,2 Mol) 3,3-Bis-(3,5-dimethyl-4-hydroxyphenyl)-propan, 0,507 (2,7 Mol-%) Phenol gelöst. Dann werden unter Rühren 600 ml Methylenchlorid zugegeben. Unter starkem Rühren werden 40 g Phosgen eingeleitet, wobei der pH-Wert der wäßrigen Phase auf 13 gehalten wird. Danach werden noch einmal 32,0 g Natriumhydroxid in wäßriger Lösung und 4 ml Triäthylamin (14 Mol-%) zudosiert. Man läßt 2,5 Stdn. unter Stockstoff bei Raumtemperatur nachreagieren. Die Aufarbeitung erfolgt analog Beispiel 1. Es resultiert ein Polycarbonat mit einer

$\eta_{rel} = 1{,}274$

$M_{LS} = 34200$

Einfriertemp.: 201 °C

Es wird hier im Vergleich zu Beispiel 1 eine erheblich höhere Molmenge Katalysator benötigt.

Beispiel 3

Darstellung eines hochmolekularen Polycarbonats auf Basis des Bischlorkohlensäureesters des 3,3-Bis-(3,5-dimethyl-4-hydroxyphenyl)-propans: 81,8 g des Bischlorkohlensäureesters des 3,3-Bis-(3,5,-dimethyl-4-hydroxyphenyl)-propans in 250 ml unstabilisiertem Methylenchlorid werden unter gutem Rühren in folgende Lösung gegeben:

41,6 g Natriumhydroxid in
300 ml 3-E-Wasser und
0,507 g Phenol (2,7 Mol-%)
0,556 g Tributylamin (1,5 Mol-%)
0,966 g Tetrabutylammoniumbromid (1,5 Mol-%).

Man läßt 1 Stde. bei 20—25°C nachreagieren. Danach ist kein freies Bisphenol in dem Reaktionsgemisch mehr nachzuweisen. Die organische Phase wird abgetrennt, mit 500 ml Methylenchlorid verdünnt und 2x mit 1%iger Phosphorsäure gewaschen. Anschließend wird die organische Polycarbonatlösung elektrolytfrei gewaschen. Durch Einrühren der Polycarbonat-Methylenchloridlösung in Methanol wird ein weißes, flockiges Polycarbonat ausgefällt.

$\eta_{rel}$ = des Polycarbonats: 1,262

Beispiel 4

Darstellung eines Polycarbonats auf Basis von 3,3-Bis-(3,5-dimethyl-4-hydroxyphenyl)-propan ohne Aminkatalyse, nur mit 1,5 Mol-% Tetrabutylammoniumbromid phasentransferkatalysiert:

Einwaagen und Reaktionsführung analog Beispiel 1, jedoch mit der Ausnahme, daß anstelle des Gemisches von 58 g Tetrabutylammoniumbromid (1,2 Mol-%) und 33,4 g Tributylamin (1,2 Mol-%) nur noch 72,5 g (1,5 Mol-%) Tetrabutylammoniumbromid eingesetzt werden. Nach aufarbeitung analog Beispiel 1 erhält man ein Polycarbonat mit einer Lösungsviskosität von

$\eta_{rel} = 1{,}246$

Tabellen 1, 2 und 3:

In der nachfolgenden Tabelle 1 wird der Einfluß unterschiedlicher Mengen von Tetrabutylammoniumbromid in der aminfreien Katalyse auf die Herstellung des Polycarbonats gemäß Beispiel 4 verdeutlicht. Der Aufbau des hochmolekularen Polycarbonats wird über die Messung der Lösungsviskosität verfolgt.

Tabelle 1

| x) Mol-% Tetrabutylammoniumbromid | $\eta$ rel nach einer 1 Stde. | Nachkondensationszeit von 2 Stdn. | 3 Stdn. |
|---|---|---|---|
| 1 | 1,202 | 1,218 | 1,220 |
| 2 | 1,246 | 1,249 | 1,256 |
| 3 | 1,335 | 1,385 | 1,395 |
| 4 | 1,405 | 1,436 | 1,436 |
| 5 | 1,421 | 1,429 | 1,440 |

x) Mol-%, bezogen auf die Anteile Bisphenol

In Tabelle 2 wird der unterschiedliche Einfluß der Substituenten in quartären Ammoniumsalzen auf die Katalysewirkung bei der Herstellung des Polycarbonats gemäß Beispiel 4 verdeutlicht. Außerdem wird ersichtlich, daß der hochmolekulare Aufbau nach 1 Stde. Nachkondensation fast vollständig abgeschlossen ist.

TABELLE 2

| 1,0 Mol-% Katalysator | nach einer Nachkondensationszeit von 1 Std. | 2 Stdn. | 3 Stdn. |
|---|---|---|---|
| 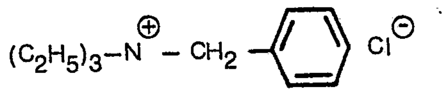 | 1,192 | 1,203 | 1,212 |
| $(C_2H_5)_3{-}N^{\oplus}{-}C_{16}H_{33}$ | 1,238 | 1,245 | 1,246 |
| $(C_4H_9)_3N^{\oplus}CH_3\ \ Br^{\ominus}$ | 1,246 | 1,249 | 1,256 |
| $(C_6H_{13})_4N^{\oplus}\ \ Br^{\ominus}$ | 1,248 | 1,252 | 1,258 |
| $(C_{10}H_{21})_3N^{\oplus}CH_3J^{\ominus}$ | 1,201 | 1,202 | 1,198 |
| $(C_2H_5)_2N^{\oplus}(C_6H_{13})_2\ \ Br^{\ominus}$ | 1,213 | 1,215 | 1,209 |
| $(C_8H_{17})_3N^{\oplus}CH_3{}^{\ominus}SO_4CH_3$ | 1,241 | 1,240 | 1,245 |
| 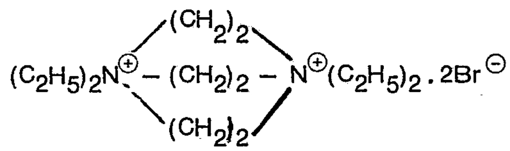 | 1,200 | 1,298 | 1,207 |
| 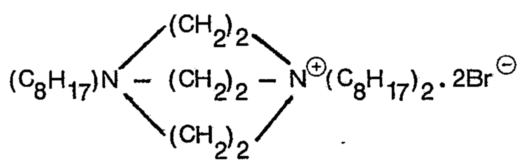 | 1,183 | 1,185 | 1,192 |
| 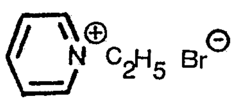 | – | 1,038 | 1,045 |
| 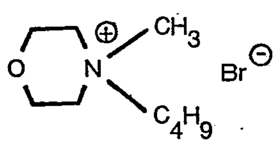 | 1,192 | 1,198 | 1,198 |
| 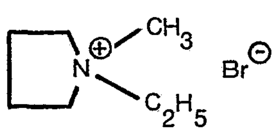 | 1,083 | 1,112 | 1,125 |
| 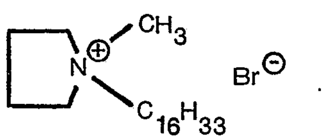 | 1,201 | 1,208 | 1,211 |
| 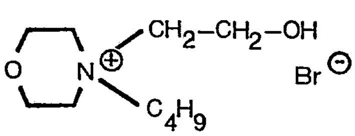 | 1,238 | 1,242 | 1,246 |

TABELLE 2 (Fortsetzung)

| 1,0 Mol-% Katalysator | nach einer Nachkondensationszeit von 1 Std. | 2 Stdn. | 3 Stdn. |
|---|---|---|---|
| 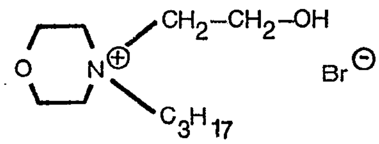 | 1,212 | 1,216 | 1,216 |
| 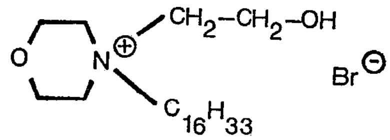 | 1,217 | 1,228 | 1,236 |
| 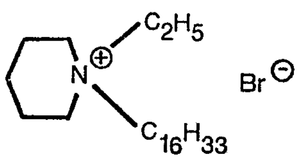 | 1,237 | 1,242 | 1,243 |
| 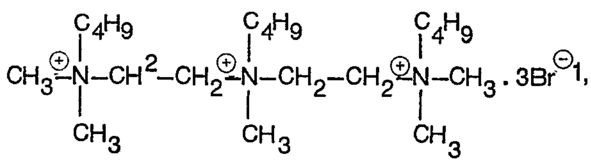 | 1,206 | 1,209 | 1,205 |
| 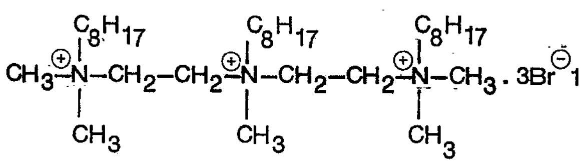 | 1,208 | 1,217 | 1,222 |
| 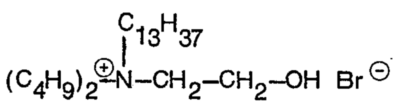 | 1,232 | 1,238 | 1,230 |
| 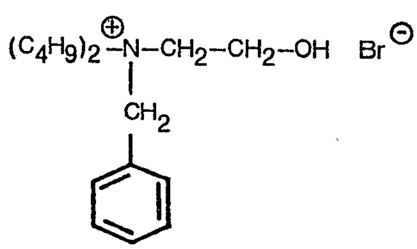 | 1,212 | 1,219 | 1,225 |

In Tabelle 3 wird der Einfluß des tertiären Amins als Cokatalysator bei der Herstellung des Polycarbonats gemäß Beispiel 1 verdeutlicht.

Tabelle 3

| Mol-% Tetra-butylammonium-bromid | Mol-% Tri-butylamin | $\eta_{rel}$ Kondensationszeit von: nach einer 1 Std. | 2 Stdn. | 3 Stdn. |
|---|---|---|---|---|
| 0,25 | 0,25 | 1,058 | 1,065 | 1,072 |
| 0,5 | 0,5 | 1,218 | 1,218 | 1,225 |
| 1,0 | 1,0 | 1,242 | 1,246 | 1,248 |
| 1,5 | 1,5 | 1,282 | 1,285 | 1,309 |
| 2,0 | 2,0 | 1,352 | 1,364 | 1,379 |

Die in Tabellen 1—3 aufgeführten Beispiele demonstrieren die kurzen Reaktionszeiten und die niedrigen Katalysatormengen des erfindungsgemäßen Verfahrens sowie die Möglichkeit ganz ohne Aminkatalyse in kurzer Zeit nur durch den Einsatz geringer Mengen Ammoniumsalz hochmolakulare Polycarbonate zu erhalten.

Beispiel 5

3500 g Wasser werden mit Stickstoff begast. Danach werden in der Reihenfolge
456 g NaOH (11,4 Mol)
322 g (1,0 Mol) 1,1,3,4,6-Pentamethyl-3-(3,5-dimethyl-4-hydroxyphenyl)-indan-5-ol und
2,16 g Phenol (2,3 Mol-% bez. auf die Bisphenolkomponente) gelöst.
Nach Zugabe von
2500 g Methylenchlorid werden noch
4,80 g Tetrabutylammoniumbromid(1,5 Mol%)zudosiert und anschließend bei pH 13—14 in 1 Std.
190 g Phosgen bei Raumtemperatur eingeleitet. Man läßt 2 Stdn. nachrühren und arbeitet wie in Beispiel 1 auf. Lösungsviskosität des Polycarbonats: $\eta_{rel}$ 1,295

Auch Copolycarbonate auf Basis von 3,3-Bis-(3,5-dimethyl-4-hydroxyphenyl)-propan (Tetramethylbisphenol A) und 1,1,3,4,6-Pentamethyl-3-(3,5-dimethyl-4-hydroxyphenyl)-indan-5-ol (Tetramethylindanbisphenol) sowie anderen Bisphenolen sind leicht nach dem erfindungsgemäßen Verfahren z.B. gemäß Beispiel 5 herzustellen:

| Mol-% Tetramethyl-bisphenol A | Mol-% Tetramethyl-indanbisphenol | Mol-% Kataly-sator Tetra-methylammonium-bromid (TBAB) Tributylamin (TBA) | $\eta_{rel}$ |
|---|---|---|---|
| 40 | 60 | 2 Mol-% TBAB | 1,254 |
| 80 | 20 | 1 Mol-% TBAB/ 1 Mol-% TBA | 1,267 |
| 95 | 5 | 1 Mol-% TBAB/ 1 Mol-% TBA | 1,287 |
| 5 | 95 | 1,5 Mol-% TBAB/ 1,5 Mol-% TBA | 1,325 |

Beispiel 6

Polycarbonat aus 2,2-Bis-(3,5-dimethyl-4-hydroxyphenyl)-propan, Katalyse während der Phosgenierung allein durch Tetrabutylammoniumbromid.

In 449 ml destilliertem Wasser und 137,4 ml 50 %iger Natronlauge (2,62 Mol NaOH) werden

284,4 g 2,2-Bis-(3,5-dimethyl-4-hydroxyphenyl)-propan (1 Mol) und 2,8 g Phenol (0,03 Mol) unter $N_2$-Durchleiten und Rühren gelöst. Nach Zugabe von 745 ml Methylenchlorid 224 ml Chlorbenzol und 3,22 g (0,01 Mol) Tetra-n-butylammoniumbromid werden unter Rühren mit gleichbleibender Geschwindigkeit 106,8 g Phosgen (1,08 Mol) gasförmig innerhalb von 15 Min. eingeleitet. Dann werden 5,53 ml Triäthylamin (0,04 Mol) zugesetzt und es wird weitere 30 Min. gerührt. Die Temperatur wird während des Phosgeneinleitens und der daran anschließenden Rührzeit bei 25—30°C gehalten. Nach dem Phosgeneinleiten und nach der anschließenden Rührzeit ist die alkalische wäßrige Phase frei von Bisphenolat. Die Aufarbeitung des gebildeten Polycarbonats erfolgt nach dem Ansäuern des Ansatzes mit Phosphorsäure, indem die abgetrennte organische Phase mit destilliertem Wasser elektrolytfrei gewaschen wird und das Polycarbonat durch Eindampfen der organischen Phase und Trocknen erhalten wird.

Folgende analytische Daten werden für das Polycarbonat erhalten:
Rel Viskosität $\eta_{rel} = 1{,}28$
phenolische OH-Endgruppen 0,006%
verseifbares Chlor (aus Chlorkohlensäureesterendgruppen) unter 20 ppm.

Beispiel 7

Polycarbonat aus 2,2-Bis-(3,5-dimethyl-4-hydroxyphenyl)-propan, Katalyse während der Phosgenierung allein durch Tetrabutylammoniumbromid.

In 971 ml destilliertem Wasser und 283 ml 50%iger Natronlauge (5,4 Mol NaOH) werden unter $N_2$-Durchleiten 284,4 g 2,2-Bis-(3,5-dimethyl-4-hydroxyphenyl)-propan und 3,8 g Phenol (0,04 Mol) gelöst. Nach Zugabe von 745 ml Methylenchlorid, 224 ml Chlorbenzol und 4,8 g Tetra-n-butylammoniumbromid (0,015 Mol) werden mit gleichbleibender Geschwindigkeit 158 g Phosgen (1,6 Mol) innerhalb von 15 Min. eibgeleitet. Dann werden 2,8 ml Triäthylamin (0,02 Mol) zugesetzt und es wird weitere 15 Min. gerührt. Die Temperatur wird während des Phosgeneinleitens und der daren anschließenden Rührzeit bei 25—30°C gehalten. Nach dem Phosgeneinleiten und nach der anschließenden Rührzeit ist die alkalische wäßrige Phase frei von Bisphenolat. Die Aufarbeitung des gebildeten Polycarbonats erfolgt nach dem Ansäuern der abgetrennten organischen Phase mit Phosphorsäure, indem die organische Phase mit destilliertem Wasser elektrolytfrei gewaschen wird und das Polycarbonat durch Eindampfen der organischen Phase und Trocknen erhalten wird.

Folgende analytische Daten werden für das Polycarbonat erhalten:
Rel. Viskosität $\eta_{rel} = 1{,}27$
phenolische OH-Endgruppen 0,007%
verseifbares Chlor (aus Chlorkohlensäureesterendgruppen) unter 20 ppm

Beispiel 8

Polycarbonat aus 2,2-Bis-(3,5-dimethyl-4-hydroxyphenyl)-propan, Katalyse während der Phosgenierung durch Tetrabutylammoniumbromid und Triäthylamin.

In 971 ml destilliertem Wasser und 283 ml 50%iger Natronlauge (5,4 Mol NaOH) werden unter $N_2$-Durchleiten 284,4 g 2,2-Bis-(3,5-dimethyl-4-hydoxyphenyl)-propan und 2,8 g Phenol (0,03 Mol) gelöst. Nach Zugabe von 745 ml Methylenchlorid 224 ml Chlorbenzol, 4,8 g Tetra-n-butylammoniumbromid (0,015 Mol) und 0,7 ml Triäthylamin (0,005 Mol) werden mit gleichbleibender Geschwindigkeit 158 g Phosgen (1,6 Mol) innerhalb von 15 Min. eingeleitet. Dann wird weitere 15 Min. gerührt. Die Temperatur wird während des Phosgeneinleitens und der daren anschließenden Rührzeit bei 25—30°C gehalten. Nach dem Phosphgeneinleiten und nach der anschließenden. Rührzeit ist die alkalische wäßrige Phase frei von Bisphenolat. Die Aufarbeitung des gebildeten Polycarbonats erfolgt wie in Beispiel 1.

Folgende analytische Daten werden für das Polycarbonat erhalten:
rel. Viskosität $\eta_{rel} = 1{,}27$
verseifbares Chlor (aus Chlorkohlensäureesterendgruppen) unter 20 ppm.

Die Beispiele 6—8 zeigen, daß durch die erfindungsgemäße Katalyse kurze Reaktionszeiten möglich sind, daß die benötigten Phosgenmengen niedrig liegen, und daß das Polycarbonat wegig OH-Endgruppen besitzt.

**Patentansprüche**

1. Verfahren zur Herstellung von thermoplastischen aromatischen Polycarbonaten mit Polykondensationsgraden P von mindestens 30, die Struktureinheiten der Formeln 1 und/oder 2

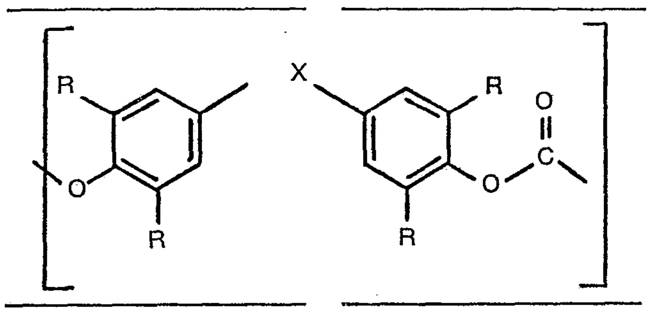

(1)

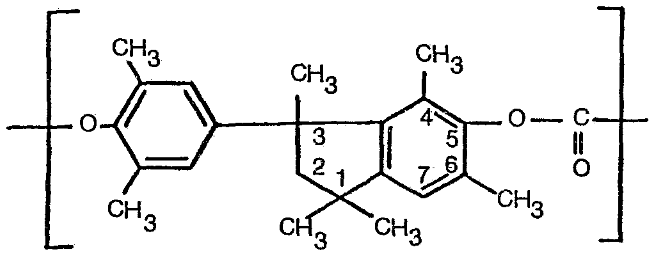

(2)

enthalten, wobei R $CH_3$ und X eine Einfachbindung, $C_1$—$C_5$-Alkylen, $C_2$—$C_5$-Alkyliden, Cyclohexylen, Cyclohexyliden, —O— oder —S— bedeuten, aus mindestens 80 Mol-%, bezogen auf Gesamtmolmenge an eingesetzten Diphenolen, Diphenolen der Formel 3 und/oder 4, worin R und X die für Formel 1 angegebene Bedeutung haben,

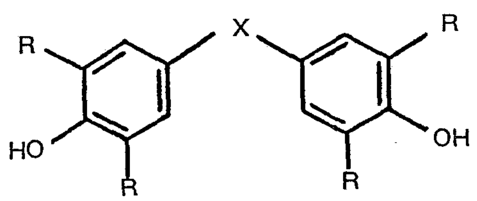

(3)

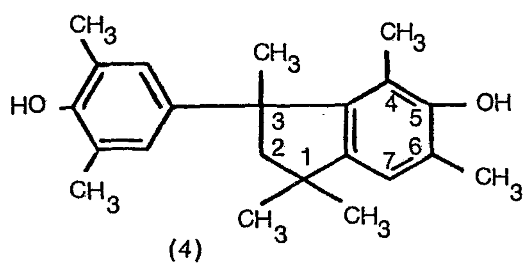

(4)

und gegebenenfalls anderen beliebigen Diphenolen, die in den vier ortho-Stellungen zu den phenolischen OH-Gruppen nicht mit C-Substituenten persubstituiert sind, gegebenenfalls in Anwesenheit von Kettenbegrenzern und gegebenenfalls von Verzweigern, nach dem Phasengrenzflächenverfahren in einem Gemisch aus wäßriger alkalischer Phase und inerter organischer Phase, das dadurch gekennzeichnet ist, daß man die Umsetzung in Gegenwart von 0,2 bis 2,5 Mol-%, bezogen auf Mole an eingesetzten Diphenolen, an quartären Ammoniumsalzen und gegebenenfalls zusätzlich 0,2 bis 5 Mol%, bezogen auf Mole an eingesetzten Diphenolen, an tertiären Aminen bei Temperaturen zwischen 10° und 40°C durchführt und eine Reaktionszeit von 0,1 bis 2 Stunden einzuhalten ist.

2. Verfahren gemäß Anspruch 1, dadurch gekennzeichnet, daß man die Umsetzung in Gegenwart von tertiären aliphatischen Aminen durchführt.

**Claims**

1. Process for the preparation of thermoplastic, aromatic polycarbonates which have degrees of polycondensation P of at least 30 and which contain structural units of the formulae 1 and/or 2

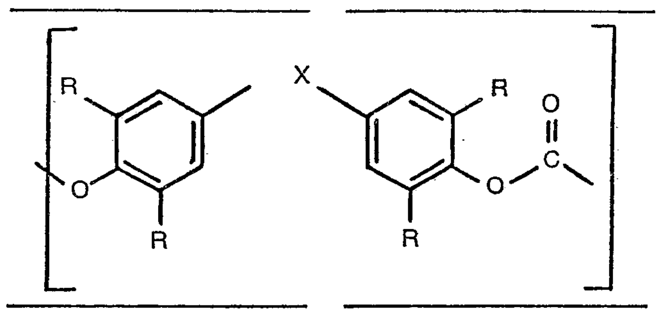

(1)

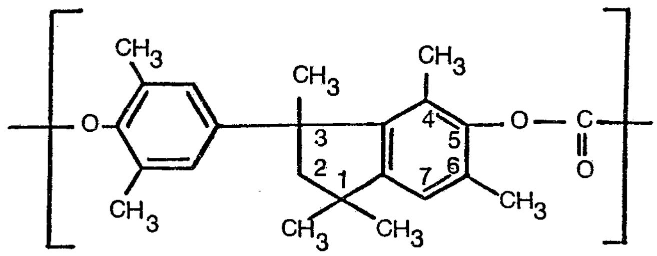

(2)

wherein

R denotes $CH_3$ and

X denotes a single bond, $C_1$—$C_5$-alkylene, $C_2$—$C_5$-alkylidene, cyclohexylene, cyclohexylidene, —O— or —S—,

from at least 80 mol%, based on the total molar amount of diphenols employed, of diphenols of the formula 3 and/or 4

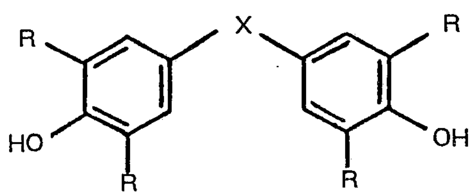

(3)

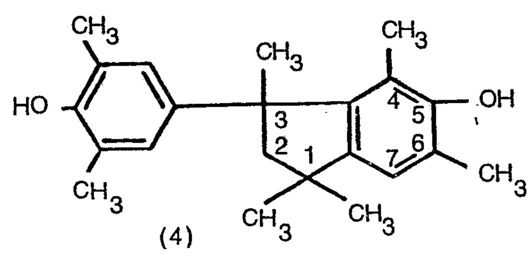

(4)

wherein

R and X have the meaning indicated for formula 1 and optionally any other desired diphenols which are not per-substituted by C-substituents in the four ortho-positions relative to the phenolic OH groups, optionally in the presence of chain stoppers and optionally of branching agents, by the phase boundary process in a mixture of an aqueous alkaline phase and an inert organic phase, which is characterised in that the reaction is carried out in the presence of 0.2 to 2.5 mol%, based on mols of diphenols employed, of quaternary ammonium salts and optionally, in addition, 0.2 to 5 mol%, based on mols of diphenols employed, of tertiary amines, at temperatures between 10° and 40°C and a reaction time of 0.1 to 2 hours must be maintained.

2. Process according to Claim 1, characterised in that the reaction is carried out in the presence of tertiary aliphatic amines.

**Revendications**

1. Procédé de préparation de polycarbonates aromatiques thermoplastiques à des degrés de polycondensation P d'au moins 30, qui contiennent des motifs de structure de formules 1 et/ou 2

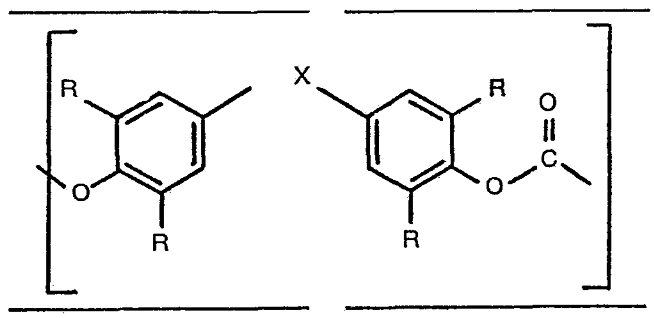

(1)

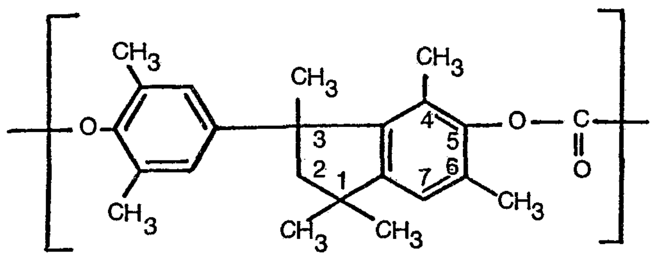

(2)

dans lesquelles

R représente $CH_3$ et

X une liaison simple, un groupe alkylène en $C_1$—$C_5$, alkylidène en $C_2$—$C_5$, cyclohexylène, cyclohexylidène, —O— ou —S—,

à partir d'au moins 80 moles%, par rapport à la quantité molaire totale de diphénols mis en oeuvre, de diphénols de formules 3 et/ou 4, dans lesquelles R et X ont les significations indiquées en référence à la formule 1

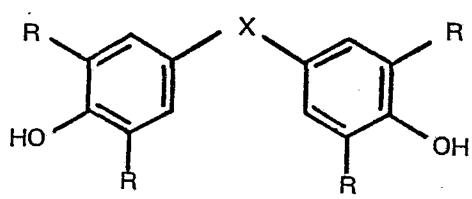

(3)

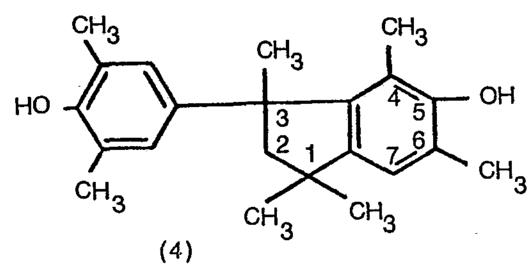

(4)

et, le cas échéant, d'autres diphénols quelconques qui ne sont pas persubstitués dans les quatre positions ortho des groupes OH phénoliques par des substituants au carbone, le cas échéant en présence de limitateurs de chaînes et, le cas échéant, d'agents ramifiants, par la technique à l'interface de phases dans un mélange d'une phase aqueuse alcaline et d'une phase organique inerte, caractérisé en ce que l'on effectue la réaction en présence de 0,2 à 2,5 moles%, par rapport au nombre de moles de diphénols mis en oeuvre, de sels d'ammonium quaternaire et, le cas échéant en outre, de 0,2 à 5 moles%, par rapport au nombre de moles de diphénols mis en oeuvre, d'amines tertiaires, à des températures de 10 à 40°C, et on maintient une durée de réaction de 0,1 à 2 h.

2. Procédé selon la revendication 1, caractérisé en ce que l'on effectue la réaction en présence d'amines aliphatiques tertiaires.